# EUROPÄISCHE PATENTANMELDUNG

(11) **EP 3 171 470 A1**
(43) Veröffentlichungstag der Anmeldung: **24.05.2017**
(21) Anmeldenummer: 16199875.2
(22) Anmeldetag: 21.11.2016
(51) Int. Cl.: H02G 1/08

(54) **EINZUGSHILFE**

(30) Priorität: 20.11.2015 DE 202015106325 U
(71) Anmelder: Balga, Wolfgang, 86825 Bad Wörishofen (DE)
(72) Erfinder: Die Erfindernennung liegt noch nicht vor
(74) Vertreter: Wittmann, Günther

(57) **Zusammenfassung**

Die Erfindung offenbart eine Einzugshilfe, die dazu ausgebildet ist, ein Kabel in einen Kabelkanal einzuziehen, aufweisend
- ein Seil, mit dem die Einzugshilfe durch einen Kabelkanal gezogen werden kann;
gekennzeichnet durch
- einen Klemmkörper, der mir dem Seil gekoppelt ist und an den das Kabel
befestigt werden kann; und
ein Klemmelement, das das Kabel an den Klemmkörper klemmt.

## Beschreibung

Die vorliegende Erfindung betrifft eine verbesserte Einzugshilfe, mit der ein Kabel sicherer durch einen Kabelkanal eingezogen werden kann.

Beispielsweise beim Bau eines Hauses werden so genannte Leerrohre verwendet, die dafür vorgesehen sind, dass ein Kabel nach Fertigstellung des Hauses dort eingezogen werden kann. Leerrohre werden insbesondere verwendet, um sicherzustellen, dass ein Kabel ausgetauscht werden kann. Ferner werden Leerrohre verwendet, wenn noch nicht feststeht, welches Kabel später eingesetzt werden soll, um einen Stromverbraucher zu versorgen und/oder ein Signal zu übertragen.

Im Stand der Technik sind Einzugshilfen bekannt, die ein Seil aufweisen, an dem eine Öse befestigt ist. Durch die Öse wird das einzuziehende Kabel gezogen und gegebenenfalls verknotet. Ein derartiger Stand der Technik weist den Nachteil auf, dass die Einzugshilfe im Bereich der Öse eine vergleichsweise hohe Dicke aufweist, da das in den Kabelkanal einzuziehende Kabel im Bereich der Öse mindestens einmal umgeschlagen werden muss. Folglich weist die Kombination aus Einzugshilfe und Kabel zumindest die doppelte Dicke wie das Kabels im Bereich der Öse auf. Folglich kann sich die Einzugshilfe mit dem daran befestigten Kabel im Bereich von Biegungen oder Kurven des Leerrohr oder eines Kabelkanals verklemmen.

DE 199 36 807 C A1 offenbart eine Vorrichtung zum wasserdichten Einführen von Kabeln in ein Rohr.

Die DE 101 06 068 B4 offenbart eine Vorrichtung zum Einführen von Koaxialkabel in Kabelkanäle, Schläuche oder Rohre.

Die Erfindung stellt sich zur Aufgabe, eine Einzugshilfe zu schaffen, die ein Verklemmen beim Einziehen eines Kabels in einen Kabelkanal vermeidet.

Die Aufgabe der Erfindung wird durch eine Einzugshilfe nach Anspruch 1 gelöst. Die abhängigen Ansprüche beanspruchen bevorzugte Weiterbildungen.

Die erfindungsgemäße Einzugshilfe ist dazu ausgebildet, ein Kabel in einen Kabelkanal einzuziehen. Ein derartiger Kabelkanal kann ein Leerrohr, ein Schlauch oder eine beliebige längliche Öffnung in einem Gebäude, einem beliebigen stationären Objekt oder einen beweglichen Objekt, beispielsweise einem Fahrzeug, einem Luftfahrzeug oder dergleichen, sein. Die Einzugshilfe weist ein Seil auf, mit dem die Einzugshilfe durch den Kabelkanal gezogen werden kann. Ein derartiges Seil kann eine Schnur, ein Zugkabel oder dergleichen umfassen. Das Seil weist verglichen mit dem Kabelkanal eine niedrigen Querschnitt auf. Das Seil kann als erstes durch den Kabelkanal geschoben werden, bis es an einem Ende des Kabelkanals wieder austritt. Anschließend kann das Seil durch den Kabelkanal gezogen werden.

Mit dem Seil ist ein Klemmkörper gekoppelt, wobei das Kabel an dem Klemmkörper befestigt werden kann. Die Einzugshilfe weist ferner ein Klemmelement auf, das das Kabel an den Klemmkörper klemmt.

Durch das Klemmen des Kabels an den Klemmkörper wird der Durchmesser der Einzugshilfe verringert, da es nicht erforderlich ist, das Kabel im Bereich einer (nicht mehr vorhanden) Öse umzulegen. Folglich weist die Kombination aus Einzugshilfe und Kabel als maximalen Durchmesser lediglich den Durchmesser des Klemmkörpers oder des Kabels auf. Die Kombination aus Einzugshilfe und Kabel weist nicht mehr den mehrfachen Durchmesser des Kabels auf. Dadurch kann ein Klemmen im Kabelkanal wirkungsvoll verhindert werden.

Das Klemmelement kann eine Schraube aufweisen. Das Klemmelement kann eine Schraube sein, beispielsweise eine sogenannte Madenschraube. Es sind aber beliebige andere Klemmelemente denkbar. Bei einer anderen Ausführungsform können mehrere Klemmelemente zum Klemmen des Kabels am Klemmkörper vorhanden sein, beispielsweise mehrere Schrauben.

Der Klemmkörper kann einen im wesentlichen rotationssymmetrischen Querschnitt aufweisen. Dadurch wird sichergestellt, dass die Einzugshilfe besonders leicht durch den Kabelkanal gezogen werden kann. Der Klemmkörper kann einen hohlen Bereich aufweisen, in dem ein Teil des Kabels vom Klemmelement geklemmt wird. Dadurch wird der Durchmesser der Kombination aus Einzugshilfe und Kabel reduziert.

Der Klemmkörper kann an dem dem Seil zugewandten Bereich konisch ausgebildet sein. Die Spitze des Konus kann im wesentlichen den Durchmesser des Seils aufweisen. Anschließend vergrößert sich die Dicke des konusförmigen Bereich bis zu dem Bereich, in dem das Kabel geklemmt wird. Durch den konusförmigen Bereich wird ein Blockieren des Klemmkörpers im Kabelkanal vermieden. Der Klemmkörper kann in dem dem Seil abgewandten Bereich zylinderförmig ausgebildet sein. Der Klemmkörper kann in dem Bereich, in dem das Kabel geklemmt wird, zylinderförmig ausgebildet sein.

Der Klemmkörper kann in dem dem Seil abgewandten Bereich zumindest teilweise hohl-zylinderförmig ausgebildet sein. In dem hohl-zylinderförmigen Bereich kann das Kabel durch das Klemmelement am Klemmkörper klemmt werden. Der Klemmkörper kann zumindest eine Öffnung aufweisen, die quer zur Längsrichtung des Klemmkörpers angeordnet ist und in der eine Schraube zum Klemmen des Kabels angeordnet ist. In axialer Richtung des Klemmkörpers können eine Mehrzahl Öffnungen angeordnet sein, die sich quer zur Längsrichtung des Klemmkörpers erstrecken, wobei in der Mehrzahl Öffnungen je eine Schraube zum Klemmen des Kabels angeordnet ist. Dadurch kann das Kabel kraftschlüssig mit dem Klemmkörper und der Einzugshilfe gekoppelt werden.

Die Einzugshilfe kann so ausgestaltet sein, dass die Außenseite des Klemmkörpers den Kabelkanal beim Einziehen des Kabels berühren kann. Aufgrund der bevorzugten konischen und/oder zylinderförmigen Ausgestaltung des Klemmkörpers ist ein Blockieren des Klemmkörpers in einem Kabelkanal nicht zu befürchten.

Das Klemmelement kann einen Druckkörper aufweisen, der das Kabel gegen den Klemmkörper drückt. Der Druckkörper kann mittels eines Schraubelementes gegen den Klemmkörper vorgespannt werden. Der Druckkörper weist an der dem Kabel zugewandten Oberfläche eine Fläche auf, die größer als der Querschnitt des Schraubelementes ist. Durch den Druckkörper kann die Flächenpressung auf das Kabel reduziert werden. Diese Ausführungsform eignet sich insbesondere bei empfindlichen Kabeln, beispielsweise Koaxialkabel.

Die Einzugshilfe kann ein Futter aufweist, das dazu ausgebildet ist, das Kabel zu klemmen. Dadurch können hohe Klemmkräfte erreicht werden. Ferner ist zum Klemmen des Kabels kein Werkzeug erforderlich.

Das Futter kann eine Klemmhülse aufweisen, die das Kabel zwischen zumindest zwei Klemmbaken klemmt und über die eine Gewindehülse angeordnet ist.

Die Gewindehülse kann ein Innengewinde aufweisen, das mit einem Außengewinde des Klemmkörpers verschraubbar ist. Die Gewindehülse muss nicht mit der Klemmhülse verschraubbar sein.

Das Seil kann zumindest in seinem dem Klemmköpers benachbarten Bereich ein Außengewinde aufweisen, das mit einem Innengewinde des Klemmkörpers verschraubt ist. Das Seil kann in den Klemmkörper eingeschraubt werden. Dadurch können beliebige Kombinationen aus unterschiedlichen Typen von Klemmkörper und Seil modular erzeugt werden.

Die Erfindung wird nun unter Bezugnahme auf die Figuren erläutert, die nicht beschränkende Ausführungsformen der Erfindung zeigen, wobei
Figur 1 einen Längsschnitt durch eine erfindungsgemäße Einzugshilfe gemäß einer ersten Ausführungsform zeigt;
Figur 2 eine Draufsicht auf einen Klemmkörper der erfindungsgemäßen Einzugshilfe gemäß der ersten Ausführungsform zeigt;
Figur 3 einen Querschnitt durch einen Klemmkörper der erfindungsgemäßen Einzugshilfe Einzugshilfe gemäß der ersten Ausführungsform zeigt; und
Figur 4 eine zweite Ausführungsform der Erfindung zeigt.

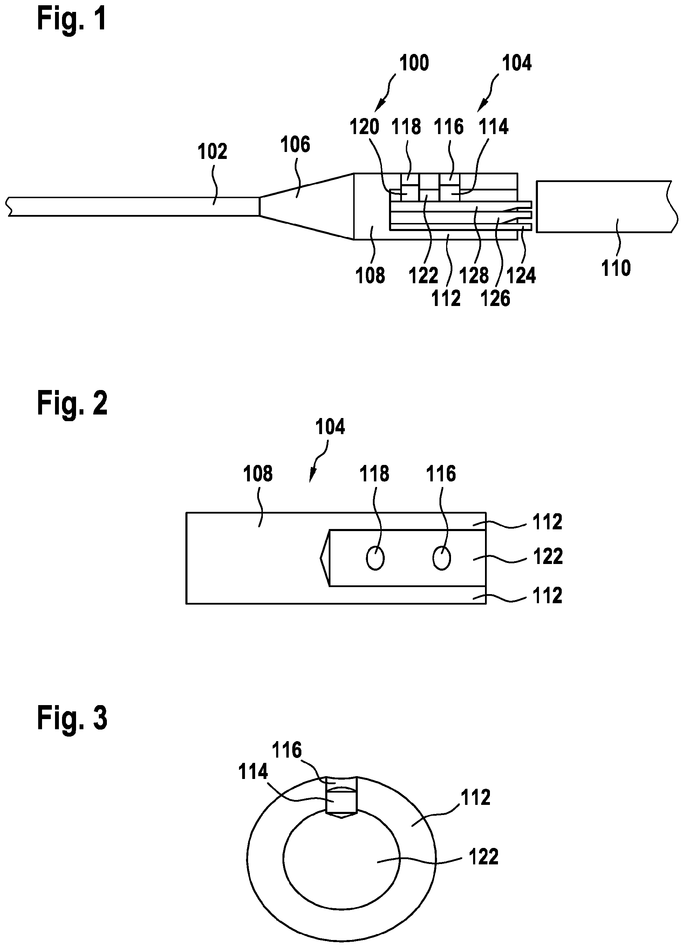

Figur 1 zeigt einen Längsschnitt der erfindungsgemäßen Einzugshilfe 100. Die erfindungsgemäße Einzugshilfe 100 umfasst ein Seil 102, das mit einem Klemmkörper 104 verbunden, beispielsweise verschraubt, ist. Der Klemmkörper ist an dem dem Seil 102 zugewandten Bereich 106 konisch ausgebildet. Der Klemmkörper 104 umfasst einen hohl-zylinderförmigen Bereich 108, der sich an dem dem Seil 102 abgewandten Bereich befindet.

In Figur 3 ist ein Querschnitt des hohl-zylinderförmigen Bereichs gezeigt. Der Klemmkörper weist eine Mehrzahl Öffnungen 116, 120 auf, in denen ein Innengewinde ausgebildet ist. In jeder der Öffnungen ist eine Schraube 114, 118, beispielsweise eine Madenschraube, angeordnet.

In Figur 1 ist gezeigt, dass die Schrauben 114, 120 in Richtung Hohlraum 122 gedreht sind, um die Adern 124, 126,128 des Kabels 110 zu klemmen. Die Adern 124, 126, 128 des Kabels 110 werden gegen die den Schrauben 114, 120 entgegengesetzte Wand 112 im zylinderförmigen Hohlraum 122 des zylinderförmigen Rohrkörpers 108 mit der Zylinderwand 112 gedrückt.

Es wird auf Figur 2 Bezug genommen, die eine teilweise weggeschnittene Draufsicht auf einen hohl-zylinderförmigen Bereich 108 des Klemmkörpers 104 zeigt. Der hohlzylinderförmige Bereich 108 umfasst eine Öffnung 122, die sich in Längsrichtung des Klemmkörpers 104 erstreckt. Die Öffnung 122 wird durch die Zylinderwand 112 begrenzt. In der Zylinderwand 112 befinden sich Öffnungen 116, 118 mit einem Innengewinde für die Schrauben 114, 120.

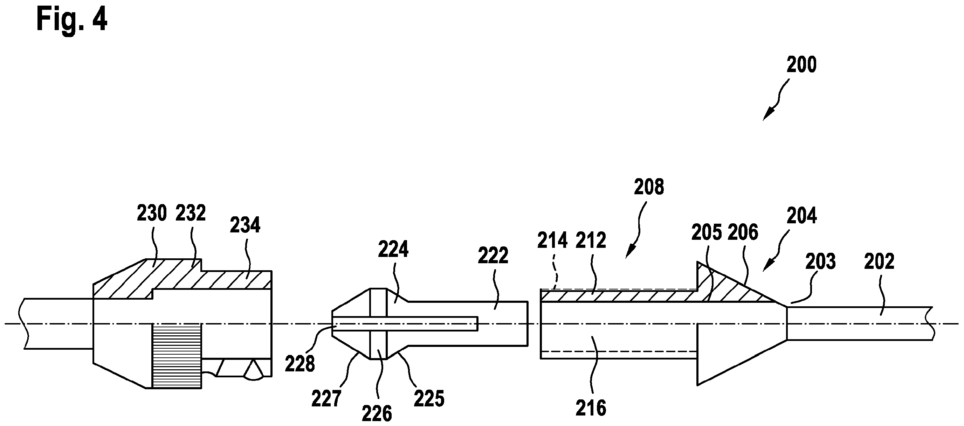

Es wird auf Figur 4 Bezug genommen, die eine zweite Ausführungsform der Erfindung zeigt. Ein Seil 202 umfasst ein Außengewinde 203, das in ein Innengewinde 205 eines Klemmkörpers 204 verschraubt ist. Der Klemmkörper umfasst einen konusförmigen Bereich 204, der an dem dem Seil 202 zugewandten Bereich angeordnet ist. Der Klemmkörper umfasst ferner einen im wesentlichen zylinderförmigen Bereich 208, der an dem dem Seil 202 abgewandten Ende des Klemmkörpers 204 angeordnet ist. Der zylinderförmige Bereich 212 umfasst eine im wesentlichen zylinderförmige Wand 212 mit einem Außengewinde 214. Innerhalb der zylinderförmigen Wand 212 befindet sich ein Hohlraum 216.

In den Hohlraum 216 kann eine Klemmhülse 222 gesteckt werden. Die Klemmhülse umfasst zumindest zwei Klemmbacken 224, 226, wobei sich im nicht geklemmten Zustand der Klemmbacken ein Spalt 228 zwischen den Klemmbacken 224, 226 bildet. Die Klemmbacken 224, 226 umfassen ferner zwei konusförmige Bereiche 225, 227. Die Klemmhülse 222, der Klemmkörper 204 und die Gewindehülse 216 bilden ein Futter.

Im Einsatz wird ein Kabel (nicht gezeigt) in den Spalt 228 zwischen den Klemmbacken 224, 226 gesteckt, wobei sich die Klemmhülse 222 in der Öffnung 216 des Klemmkörpers 204 befindet oder dort eingesteckt wird.

Anschließend wird eine Gewindehülse 232 über die in den Klemmkörper 204 eingeschobene Klemmhülse 222 geschoben. Die Gewindehülse umfasst ein Innengewinde 234, das mit dem Außengewinde 214 an der Wand 212 des Klemmkörpers 204 verschraubt werden kann. Beim Einschrauben der Gewindehülse 232 drückt die Gewindehülse gegen die Backen 224, 226, insbesondere den konischen Bereich 227, so dass der Spalt 228 verringert wird und das Kabel geklemmt wird. Ferner drückt die Wand 212 des Klemmkörpers 204 gegen den konusförmigen Bereich 225, wodurch auch die Backen 224, 226 zusammengedrückt werden, um den Spalt 228 zu verringern und das Kabel zu klemmen. An der Gewindehülse kann ein aufgerauter Bereich 232 angeordnet sein, mittels dem die Gewindehülse auf den Klemmkörper geschraubt werden kann.

Die Erfindung hat den Vorteil, dass die Kombination aus Einzugshilfe 100, 200 und Kabel 110 einen niedrigeren Durchmesser als herkömmliche Lösungen hat. Dadurch wird ein Blockieren der Einzugshilfe 100, 200 und des Kabels 110 beim Einziehen eines Kabels mittels des Seils 102 in einen Kabelkanal vermieden.

Zudem ist die Einzugshilfe 100, 200 gemäß der vorliegenden Erfindung einfacher handzuhaben.

Die Einzugshilfe kann für beliebige andere Anwendungen verwendet werden, bei denen ein einzuziehendes Element in eine längliche Öffnung bzw. Rohr einzuziehen ist, beispielsweise um Schläuche einzuziehen.

## Patentansprüche

1. Einzugshilfe, die dazu ausgebildet ist, ein Kabel in einen Kabelkanal einzuziehen, aufweisend
- ein Seil, mit dem die Einzugshilfe durch einen Kabelkanal gezogen werden kann;
**gekennzeichnet durch**
- einen Klemmkörper, der mir dem Seil gekoppelt ist und an den das Kabel befestigt werden kann; und
- ein Klemmelement, das das Kabel an den Klemmkörper klemmt.

2. Einzugshilfe nach Anspruch 1, wobei das Klemmelement eine Schraube aufweist.

3. Einzugshilfe nach Anspruch 1 oder 2, wobei der Klemmkörper einen im wesentlichen rotationssymmetrischen Querschnitt aufweist.

4. Einzugshilfe nach einem der Ansprüche 1 bis 3, wobei der Klemmkörper einen hohlen Bereich aufweist, in dem ein Teil des Kabels vom Klemmelement geklemmt wird.

5. Einzugshilfe nach einem der Ansprüche 1 bis 4, wobei der Klemmkörper in dem dem Seil zugewandten Bereich konisch ausgebildet ist.

6. Einzugshilfe nach einem der Ansprüche 1 bis 5, wobei der Klemmkörper in dem dem Seil abgewandten Bereich zylinderförmig ausgebildet ist.

7. Einzugshilfe nach einem der Ansprüche 1 bis 6, wobei der Klemmkörper in dem dem Seil abgewandten Bereich zumindest teilweise hohl-zylinderförmig ausgebildet ist.

8. Einzugshilfe nach einem der Ansprüche 1 bis 7, wobei der Klemmköper zumindest eine Öffnung aufweist, die quer zur Längsrichtung des Klemmkörpers angeordnet ist und in der eine Schraube zum Klemmen des Kabels angeordnet ist.

9. Einzugshilfe nach einem der Ansprüche 1 bis 8, wobei die Einzugshilfe so ausgestaltet ist, dass die Außenseite des Klemmkörpers den Kabelkanal beim Einziehen des Kabels berühren kann.

10. Einzugshilfe nach einem der Ansprüche 1 bis 9, wobei das Klemmelement einen Druckkörper aufweist, der das Kabel gegen den Klemmkörper drückt, wobei der Druckköper mittels eines Schraubelementes gegen den Klemmkörper vorgespannt wird und wobei der Druckkörper an der dem Kabel zugewandten Oberfläche eine Fläche aufweist, die größer als der Querschnitt des Schraubelementes ist.

11. Einzugshilfe nach Anspruch 1, wobei die Einzugshilfe ein Futter aufweist, das dazu ausgebildet ist, das Kabel zu klemmen.

12. Einzugshilfe nach Anspruch 11, **dadurch gekennzeichnet, dass** das Futter eine Klemmhülse aufweist, die das Kabel zwischen zwei Klemmbaken klemmt und über die eine Gewindehülse angeordnet ist.

13. Einzugshilfe nach Anspruch 12, wobei die Gewindehülse ein Innengewinde aufweist, das mit einem Außengewinde des Klemmkörpers verschraubbar ist.

14. Einzugshilfe nach einem der Ansprüche 1 bis 13, wobei das Seil zumindest in seinem dem Klemmköpers benachbarten Bereich ein Außengewinde aufweist, das mit einem Innengewinde des Klemmkörpers verschraubbar ist.
